# FASCICULE DE BREVET EUROPEEN

(11) **EP 3 241 035 B1**
(45) Date de publication et mention de la délivrance du brevet: **30.01.2019**
(21) Numéro de dépôt: 15820188.9
(22) Date de dépôt: 30.12.2015
(51) Int. Cl.: G01S 3/786, G01S 13/86, G01S 13/72, G01S 7/22

(54) **PROCÉDÉ DE SUIVI OPTIQUE ASSISTÉ PAR RADAR ET SYSTÈME DE MISSION POUR LA MISE EN OEUVRE DE CE PROCÉDÉ**
RADARGESTÜTZTES OPTISCHES SPURFOLGEVERFAHREN UND EINSATZSYSTEM ZUR DURCHFÜHRUNG DIESES VERFAHRENS
RADAR-ASSISTED OPTICAL TRACKING METHOD AND MISSION SYSTEM FOR IMPLEMENTATION OF THIS METHOD

(30) Priorité: 30.12.2014 FR 1403045
(43) Date de publication de la demande: 08.11.2017
(73) Titulaire: Thales, 92400 Courbevoie (FR)
(72) Inventeur: GUERRINI, Gilles, 33608 Pessac Cedex (FR); RICHARD, Fabien, 33608 Pessac Cedex (FR); CAMUS, Fabien, 33608 Pessac Cedex (FR)
(74) Mandataire: Lavoix
(86) Numéro de dépôt international: PCT/EP2015/081425
(87) Numéro de publication internationale: WO 2016/107907

(56) Documents cités:
- EP-A1- 0 528 077
- SORELL M J ET AL: "On-platform radar and optical track fusion", SIGNALS, SYSTEMS AND COMPUTERS, 1993. 1993 CONFERENCE RECORD OF THE TW ENTY-SEVENTH ASILOMAR CONFERENCE ON PACIFIC GROVE, CA, USA 1-3 NOV. 1993, LOS ALAMITOS, CA, USA,IEEE COMPUT. SOC, 1 novembre 1993 (1993-11-01), pages 268-272, XP010096337, DOI: 10.1109/ACSSC.1993.342515 ISBN: 978-0-8186-4120-6
- PABLO ARAMBEL ET AL: "<title>Performance assessment of a video-based air-to-ground multiple target tracker with dynamic sensor control</title>", PROCEEDINGS OF SPIE, vol. 5809, 25 mai 2005 (2005-05-25), pages 123-134, XP055219397, US ISSN: 0277-786X, DOI: 10.1117/12.603046 ISBN: 978-1-62841-799-9

## Description

La présente invention a pour domaine celui des systèmes de mission pour la surveillance et le renseignement, intégrant un capteur aéroporté du type caméra électro-optique.

Une caméra électro-optique intègre une caméra optique, montée mobile sur le porteur de manière à pouvoir être orientée, et une chaîne de traitement des images vidéo générées par la caméra.

La chaîne de traitement permet la détection d'objets mobiles dans la succession des images vidéo acquises, en utilisant des algorithmes de détection adaptés.

Bien évidemment, pour cela, il est nécessaire que la cible réelle puisse être détectée, c'est à dire qu'elle soit non seulement à l'intérieur du champ d'observation de la caméra, mais également qu'elle puisse être isolée dans les images vidéo acquises, par les algorithmes de détection.

Or, les conditions météorologiques n'autorisent pas toujours la détection d'une cible. Lorsque le ciel est nuageux, la visibilité réduite ne permet plus la détection d'une cible. Une caméra électro-optique est ainsi très sensible aux conditions météorologiques.

Par ailleurs, une caméra électro-optique est capable d'être orientée de manière à suivre un objet cible choisi parmi les objets détectés. Plus précisément, la caméra est asservie automatiquement sur l'objet cible. La chaine de traitement applique un algorithme de prédiction propre à calculer une position estimée de l'objet cible à l'instant courant, en fonction de la vitesse vectorielle instantanée de l'objet cible à l'instant précédent. Une détection au voisinage de la position estimée est considérée comme étant une détection de l'objet cible. On peut ainsi suivre un objet cible d'image en image. C'est la notion de pistage d'un objet cible.

Le pistage d'un objet cible ne tient pas compte des modifications de direction ou de vitesse de la cible entre l'instant présent d'estimation et l'instant précédent. De ce fait, sur des temps longs, le pistage ne permet plus de prédire avec efficacité la position de l'objet cible et par conséquent d'associer une détection dans l'image courante avec l'objet cible.

Or, en cas d'obstruction du champ d'observation de la caméra, par exemple par le passage d'un objet masquant entre la caméra et la cible, la probabilité de récupérer l'objet cible lorsque la caméra ne sera plus obstruée est faible. Ainsi, la prédiction n'est pas suffisante pour permettre le pistage de cet objet cible.

En conséquence, dans des conditions météorologiques difficiles ou en cas de masquage de l'objet cible, un opérateur du système de mission regardant les images vidéo affichées sur un écran est dans l'incapacité d'interpréter rapidement ce qui se passe sur le théâtre d'opération.

Il y a donc un besoin de pouvoir pister un objet cible avec une caméra électro-optique, même en cas d'impossibilité de détecter cet objet, que ce soit à cause des conditions météorologiques difficiles ou de l'obstruction du champ d'observation de la caméra.

Pour résoudre ce problème des travaux ont été menés sur la fusion des données provenant d'une caméra électro-optique et d'un capteur radar.

Dans la présente demande de brevet, un capteur radar intègre un radar et une chaîne de traitement du signal généré par le radar.

La chaîne de traitement comporte un module de détection d'objets à partir des échos et un module de pistage permettant de suivre un objet au cours du temps. Un objet radar sera dénommé plot dans la présente demande de brevet.

De manière générale, le signal généré par un radar présente l'avantage opérationnel de permettre la détection de cibles sur une distance plus longue qu'une caméra électro-optique, et d'être insensible aux conditions météorologiques (tout au moins dans des gammes de fréquences adaptées) et au masquage d'une cible par une autre.

Actuellement, les solutions préconisées consistent à effectuer un pistage radar d'un objet cible radar, et à pointer la caméra électro-optique sur cet objet cible radar.

Cependant, ces solutions impliquent un processus assez long et complexe de pistage radar d'un grand nombre d'objets détectés. Ce travail est souvent inutile au regard de ou des quelques objets d'intérêt recherchés par l'opérateur. En effet, 80% des objets pistés par le capteur radar sont des objets sans intérêt pour l'opérateur.

De plus, ces solutions ne sont mises en oeuvre que dans la phase aval d'aide à l'identification, donc très tardivement par rapport aux besoins de l'opérateur.

Enfin, au moment où il souhaite observer optiquement un objet cible radar, l'opérateur regarde une image vidéo qui, si la météo n'est pas bonne, ne lui apporte aucune information lui permettant d'identifier l'objet cible et s'il s'agit d'un objet d'intérêt.

Par ailleurs, on connaît la demande de brevet EP 0 528 077 A1 et les articles respectivement de SORELL M J et al: "On-platform radar and optical track fusion", SIGNALS, SYSTEMS AND COMPUTERS, 1993, CONFERENCE RECORD OF THE TWENTY-SEVENTH ASILOMAR CONFERENCE ON PACIFIC GROVE, CA, USA 1-3 Nov. 1993, LOS ALAMITOS, CA, USA, IEEE COMPUT. SOC, 1 novembre 1993, pages 268-272, et de PABLO ARAMBEL et al: "Performance assessment of a video-based air-to-ground multiple target tracker with dynamic sensor control", PROCEEDINGS OF SPIE, vol. 5809, 25 mai 2005, pages 123-134.

L'invention a donc pour but de pallier ce problème.

L'invention a pour objet un procédé de suivi optique assisté par radar, mis en oeuvre dans un système de mission comportant une caméra électro-optique générant des images vidéo, détectant des objets mobiles, et pistant un objet cible et un capteur radar générant des signaux et détectant des plots, caractérisé en ce qu'il comporte les étapes

consistant à : acquérir une image vidéo délivrée par la caméra électro-optique et des plots délivrés par le capteur radar à l'instant de la génération de l'image vidéo acquise ; convertir la position géographique de chaque plot acquis, exprimée dans un premier repère associé au capteur radar, en une position géographique exprimée dans un second repère associé à une direction de pointage de la caméra de la caméra électro-optique à l'instant de la génération de l'image vidéo ; corriger la position géographique de chaque plot dans le second repère, en fonction de caractéristiques de la caméra, de manière à obtenir une position dans l'image.

Suivant des modes particuliers de réalisation, le procédé comporte une ou plusieurs des caractéristiques suivantes, prises isolément ou suivant toutes les combinaisons techniquement possibles :
- le procédé comporte les étapes consistant à : ajouter à l'image vidéo un symbole graphique pour chaque plot, le symbole graphique étant placé dans l'image de manière à correspondre à la position dans l'image du plot associé ; et afficher une image enrichie obtenue à partir de l'image vidéo et de symboles graphiques ajoutés.
- le procédé comporte une étape consistant à associer à chaque objet mobile détecté par la caméra électro-optique un plot possible, le plot possible à associer à un objet mobile étant le plot qui est le plus proche dudit objet mobile dans l'image vidéo, augmenté des informations de l'objet mobile correspondant.
- le procédé comporte une étape consistant à estimer, dans l'image vidéo courante, la position d'un plot estimé, en utilisant les informations des plots possibles associés à un objet cible dans une ou plusieurs images vidéo précédentes.
- le procédé comporte une étape consistant à associer à chaque plot estimé un plot possible, le plot possible à associer à un plot estimé étant le plot qui est le plus proche dudit plot estimé dans l'image vidéo.
- le procédé comporte une étape consistant à asservir la caméra électro-optique au moyen des informations relatives au plot estimé ou au plot possible associé au plot estimé correspondant à un objet cible.

L'invention a également pour objet un système de mission comportant un capteur radar et un caméra électro-optique, caractérisé en ce qu'il comporte un dispositif propre à acquérir une image vidéo délivrée par la caméra électro-optique et des plots délivrés par le capteur radar à l'instant de la génération de l'image vidéo acquise, et comportant : un moyen de transformation d'une position géographique de chaque plot acquis, exprimée dans un premier repère associé au capteur radar, en une position géographique exprimée dans un second repère associé à une direction de pointage de la caméra de la caméra électro-optique à l'instant de la génération de l'image vidéo ; un moyen de correction de la position géographique de chaque plot dans le second repère en sortie du moyen de transformation, en fonction de caractéristiques de la caméra, de manière à obtenir une position dans l'image.

Suivant des modes particuliers de réalisation, le système comporte une ou plusieurs des caractéristiques suivantes, prises isolément ou suivant toutes les combinaisons techniquement possibles :
- le système comporte un moyen de superposition propre à ajouter à l'image vidéo, un symbole graphique pour chaque plot, le symbole graphique étant placé dans l'image de manière à correspondre à la position dans l'image du plot associé délivrée en sortie du moyen de correction, et une interface homme / machine d'affichage d'une image enrichie obtenue à partir de l'image vidéo et de symboles graphiques ajoutés.
- le système comporte un moyen d'association consistant à associer à chaque objet mobile détecté par la caméra électro-optique un plot possible, le plot possible à associer à un objet mobile étant le plot qui est le plus proche dudit objet mobile dans l'image vidéo courante, augmenté des informations de l'objet mobile correspondant.
- le système comporte un moyen d'estimation propre à estimer, dans l'image vidéo courante, la position d'un plot estimé, en utilisant les informations des plots possibles associés à un objet cible dans une ou plusieurs images vidéo précédentes.
- le système comporte un moyen d'association propre à associer à chaque plot estimé un plot possible, le plot possible à associer à un plot estimé étant le plot qui est le plus proche dudit plot estimé dans l'image vidéo courante.
- le système comporte un moyen d'asservissement complémentaire propre à commander un module de pointage de la caméra électro-optique au moyen des informations relatives au plot estimé ou au plot possible associé au plot estimé correspondant à un objet cible.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'un système de mission selon un mode de réalisation préféré de l'invention ;
- La figure 2 est une représentation schématique d'un procédé d'enrichissement d'images vidéo d'une caméra électro-optique avec des plots radar, réalisé par le système de la figure 1 ; et,
- La figure 3 est une représentation schématique d'un procédé d'asservissement de la caméra électro-optique du système de la figure 1, en tenant compte des plots radar.

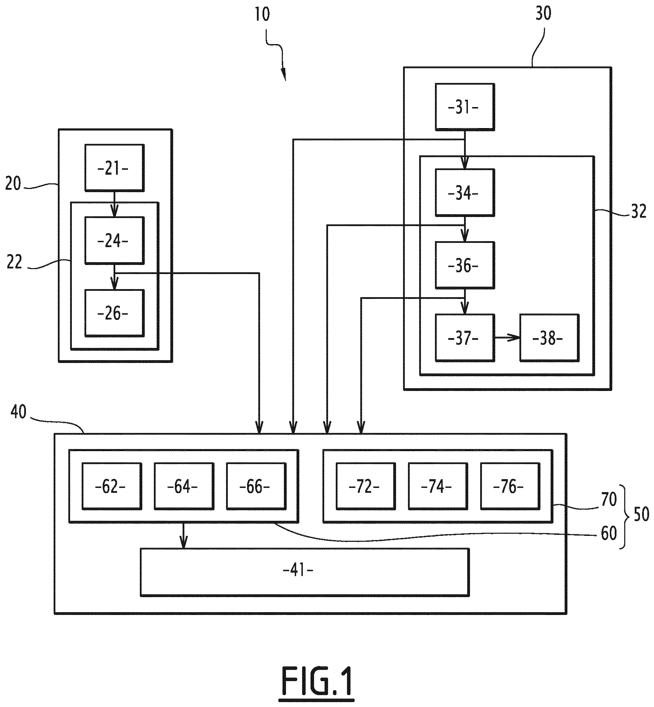

La figure 1 représente schématiquement un système de mission dédié à la surveillance et au renseignement 10.

Ce système 10 comporte un capteur radar 20 intégrant un radar 21 et sa chaine de traitement 22.

La chaine de traitement comporte un module de détection 24 permettant, à partir des échos présents dans le signal brut délivré par le radar, d'extraire des détections radar, dénommées plots dans la suite de la présente demande de brevet afin de les distinguer des détections optiques réalisées par la caméra électro-optique.

Les plots fournis par le capteur radar sont des plots MTI (« Moving Target Information ») comportant une position en latitude / longitude suivant le modèle WGS 84 (pour World Geodetic System 1984). Les plots MTI sont des informations brutes issues d'une acquisition radar sans historique, qui permettent d'avoir des informations sur les cibles mobiles à un instant donné. Les plots MTI ne peuvent pas être interprétés sans pistage radar associé, en particulier en milieu urbain ou semi-urbain où le nombre d'objets en mouvement est important. Les plots sont des données brutes disponibles rapidement dès qu'un écho est détecté.

La chaine de traitement radar comporte un module de pistage 26 propre à élaborer des pistes radar à partir des plots obtenus en sortie du module de détection. Une piste est une détection confirmée sur un intervalle de temps prédéterminé.

Le système 10 comporte une caméra électro-optique 30 intégrant une caméra optique 31 délivrant un certain nombre d'images vidéo par seconde, et une chaine de traitement 32.

La chaîne de traitement 32 comporte un module de détection 34 propre à détecter des objets mobiles d'une image vidéo à la suivante. Le module de détection génère des détections optiques ou objets dans ce qui suit.

La chaine de traitement 32 comporte un module de pistage 36 propre à élaborer des pistes optiques à partir des objets obtenus en sortie du module de détection 34. Une piste est une détection confirmée sur un intervalle de temps prédéterminé.

La chaîne de traitement 32 comporte un module d'asservissement 37 sur une piste d'un objet choisi comme objet cible. Le module d'asservissement met en oeuvre un algorithme de prédiction de la position à venir de l'objet cible par rapport à sa vitesse vectorielle instantanée. En particulier, le module d'asservissement génère un signal binaire indiquant soit qu'il continue à recevoir des détections optiques lui permettant de suivre l'objet cible, soit qu'il a perdu le suivi de l'objet cible ne recevant plus de détections optiques. Lorsqu'il suit un objet cible, le module d'asservissement génère périodiquement des commandes de pointage de la caméra.

La chaîne de traitement 32 comporte un module de pointage 38 de la caméra 31 propre à orienter la direction de pointage de la caméra en fonction d'une commande de pointage. Cette commande est soit délivrée par le module d'asservissement, soit délivrée par le dispositif 50 de suivi optique assisté par radar.

Le système de mission 10 comporte une station principale 40 qui est un ordinateur.

La station principale comporte une interface homme / machine 41 permettant à un opérateur d'interagir avec le système. Cette interface comporte notamment un moyen d'affichage, tel qu'un écran, pour l'affichage d'images vidéo enrichies, et un moyen de saisi, permettant la sélection d'entités affichées à l'écran. De préférence, l'écran est un écran tactile constituant à la fois un moyen d'affichage et un moyen de saisi, l'opérateur n'ayant qu'à toucher l'écran avec son doigt pour sélectionner l'entité affichée au point correspondant de l'écran.

La station principale 40 comporte un dispositif 50 de suivi optique assisté par radar propre à réaliser la fusion des données radar et données optiques et à générer des commandes d'asservissement du module de pointage 38 de la caméra électro-optique 30.

Le dispositif 50 comporte un module d'enrichissement 60 des images vidéo délivrées par la caméra 31 et un module d'asservissement 70 complémentaire de la caméra.

Le module d'enrichissement prend en entrée une image vidéo délivrée par la caméra 31 et les plots radar délivrées par le module de détection 24, et délivre en sortie une image vidéo enrichie.

Le module d'enrichissement comporte un moyen de transformation, un moyen de correction, et un moyen de superposition.

Le moyen de transformation 62 permet d'appliquer un changement de repère à la position géographique des plots pour passer d'un premier repère associé au radar 21, à un second repère associé à la caméra 31, plus particulièrement à la direction de pointage de la caméra 31.

Le moyen de correction 64 permet d'appliquer une correction géométrique aux positions géographiques des plots exprimées dans le second repère lié à la caméra pour tenir compte de la déformation introduite par l'optique de la caméra 31. Les positions dans l'image ainsi obtenues correspondent aux positions des plots dans l'image vidéo à l'instant courant. Ces positions dans l'image sont exprimées en nombre de pixels selon les directions des ordonnées et des abscisses de l'image vidéo.

Le moyen de superposition 66 permet d'ajouter à l'image vidéo courante des symboles graphiques pour chaque plot radar. Le symbole graphique est placé dans l'image vidéo en fonction de la position dans l'image du plot considéré délivrée par le moyen de correction 64.

Le module d'asservissement complémentaire 70 comporte un moyen d'association 72 propre à associer à un objet mobile détecté par la caméra électro-optique 30, un plot radar. Par exemple, la distance, évaluée dans l'image, entre l'objet mobile et un plot, lorsqu'elle est inférieure à un seuil prédéterminé permet de réaliser cette association.

Le module d'asservissement complémentaire 70 comporte un moyen d'estimation 74 propre à calculer un plot estimé à partir d'un historique de plots associés à un objet cible d'une piste optique.

Le module d'asservissement complémentaire 70 comporte un moyen d'asservissement 76 propre à générer, à partir de la position d'un plot dans l'image, une commande de pointage et à la transmettre au module de pointage 38 de la caméra électro-optique 30 pour effectuer le dépointage de la caméra.

Dans le présent mode de réalisation, le système de mission 10 est intégralement embarqué à bord d'un avion de surveillance, par exemple maritime.

En variante, le dispositif 60 est intégré à la caméra électro-optique 30. De cette manière, la caméra électro-optique peut être connectée directement au capteur radar 20, et le signal vidéo enrichi est transmis directement de la sortie de la caméra électro-optique vers l'interface homme / machine de la station principale du système de mission.

Dans une autre variante, la caméra électro-optique 30 est indépendante du capteur radar 20 et de la station principale 40. Par exemple, la caméra électro-optique est embarquée dans un premier avion léger, à proximité du théâtre d'opération, tandis que le capteur radar est situé dans un second avion de surveillance, à plus grande distance du théâtre d'opération, la station principale étant située au sol.

Le système de mission 10 venant d'être présenté permet la mise en oeuvre d'un procédé de suivi optique assisté par radar.

Ce procédé comporte un procédé d'enrichissement des images vidéo délivrées par la caméra électro-optique 30 avec les plots délivrés par le capteur radar 20, et un procédé d'asservissement complémentaire de celui de la caméra électro-optique 30 à partir des plots délivrés par le capteur radar 20 et associés à un objet cible.

La caméra électro-optique génère des images vidéo, détecte des objets mobiles, et piste ces objets mobiles.

Le capteur radar génère des signaux et détecte des plots.

Parallèlement, le procédé d'enrichissement d'une image vidéo est mis en oeuvre.

A l'étape 110, le module d'enrichissement 60 du dispositif 50 réalise l'acquisition d'une image vidéo délivrée par la caméra électro-optique en tant qu'image vidéo courante. Il réalise également l'acquisition des plots délivrés par le capteur radar, à l'instant de la génération par la caméra électro-optique de l'image vidéo courante.

A l'étape 120, la position géographique de chaque plot, exprimée dans un premier repère, est transformée en une position géographique exprimée dans un second repère. Le second repère est lié à la direction de pointage de la caméra au moment de la génération de l'image vidéo. Pour cela, le moyen de transformation 62 est exécuté. Il utilise par exemple des valeurs courantes des angles de pointage de la caméra délivrés par le module de pointage 38.

A l'étape 130, la position géographique de chaque plot dans le second repère lié à la caméra est corrigée, de manière à obtenir une position dans l'image. Pour ce faire, les caractéristiques optiques de la caméra (déformation de l'image, ouverture, distance focale...) sont prises en compte par le moyen de correction 64 lors de son exécution.

La position géographique de chaque plot radar est ainsi convertie en une position dans l'image.

A l'étape 140, pour chaque plot, un symbole graphique est ajouté sur l'image vidéo acquise à l'étape 110. Pour cela, le moyen de superposition 66 est exécuté de manière à incruster le symbole graphique à la position dans l'image du plot considéré.

Une image vidéo enrichie est ainsi obtenue, qui est affichée, à l'étape 150, sur l'écran tactile de l'interface homme / machine 41.

Ainsi, les images vidéo sont enrichies de données radar bas niveau, en l'occurrence les détections radar, ou plots, correspondants aux échos significatifs extraits du signal radar avant tout autre traitement.

La fusion des données radar et optiques offre un support qui est plus facilement et plus efficacement exploitable par l'opérateur. Celui-ci peut filtrer rapidement le flux de plots provenant du radar, et associer une identification à un plot radar sans attendre la création d'une piste par la chaine de traitement du capteur radar. Ces images vidéo enrichies permettent de faciliter le travail de sélection d'un objet cible optique, et d'assurer un meilleur pistage optique de cet objet cible.

Avantageusement, le symbole graphique est interactif de sorte que l'opérateur peut désormais manipuler les plots dans les images du flux vidéo de la caméra électro-optique.

Le procédé de fusion se poursuit par une étape 210 au cours de laquelle le moyen d'association 72 est exécuté pour associer à chaque objet mobile détecté par la caméra électro-optique 30, un plot possible. Un plot possible est un plot radar qui pourrait correspondre à un objet mobile détecté dans l'image vidéo courante. A priori, le plot possible à associer à un objet mobile est le plot qui est le plus proche de cet objet mobile, dans l'image vidéo.

Lorsqu'une telle association est possible, les informations de l'objet mobile, en particulier sa vitesse vectorielle, sont affectées au plot possible.

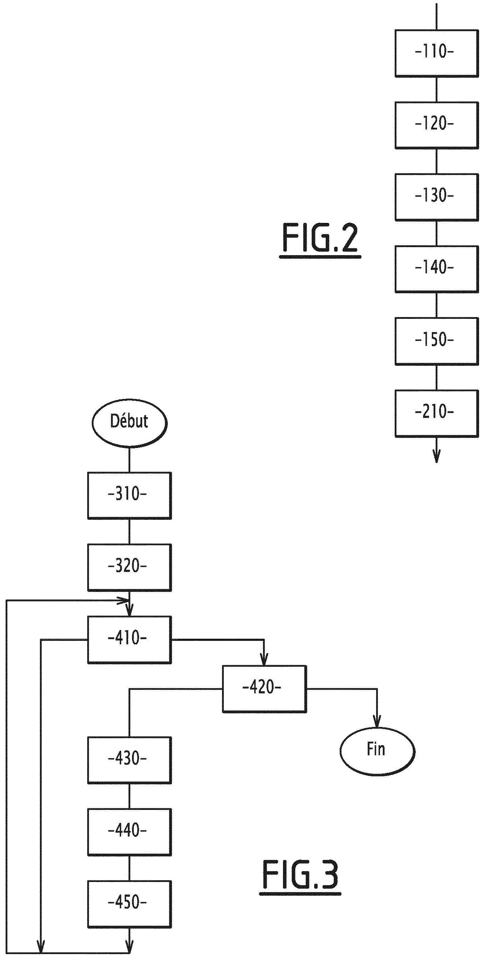

Le procédé de suivi optique assisté par radar comporte un procédé de suivi complémentaire, représenté à la figure 3.

A l'étape 310, l'opérateur sélectionne une piste optique parmi les pistes délivrées par le module de pistage optique 36. Celle-ci correspond à la récurrence, à travers plusieurs images vidéo successives, d'un objet dit cible parmi les objets mobiles détectés par la caméra électro-optique.

A l'étape 320, la position géographique de cet objet cible est transmise au module d'asservissement 37 de la caméra électro-optique 30, de manière à générer une commande adaptée du module de pointage 38 de la caméra 31. A partir de cet instant, la caméra électro-optique 30 est asservie sur l'objet cible.

Plus précisément, la position de l'objet cible dans l'image permet de calculer (par des traitements inverses des transformations et corrections indiquées ci-dessus) la position géographique de celui-ci. Cela permet de calculer une distance, un azimut (direction) et un angle de vue. Ces données de consigne permettent l'asservissement de la caméra.

L'objet cible se trouve ainsi sensiblement au centre de l'image vidéo.

Puis, à chaque nouvelle image-vidéo, le procédé est le suivant :
A l'étape 410, la caméra électro-optique 30 cherche à pister l'objet cible parmi les objets mobiles détectés dans l'image vidéo courante.

Dans l'affirmative, la position mise à jour de l'objet cible est transmise au module d'asservissement de la caméra électro-optique, de manière à ce qu'elle soit pilotée afin de continuer à poursuivre l'objet cible. Celui-ci reste sensiblement au centre de l'image vidéo.

Dans la négative, c'est-à-dire si aucune détection optique dans l'image courante ne permet de poursuivre le pistage optique de l'objet cible par la caméra électro-optique, un signal de perte du pistage optique est émis.

Lors de la réception d'un tel signal, à l'étape 420, le dispositif 50 consulte l'historique des plots possibles associés à l'objet cible dans les images vidéo précédentes.

Si le dispositif 50 ne trouve pas de plots possibles associés à cet objet cible dans l'historique, la fonction de suivi optique assistée par radar n'est pas disponible. La poursuite de l'objet cible n'est pas possible.

Si au contraire, à l'étape 420, le dispositif 50 trouve un ou plusieurs plots possibles, alors la fonction de suivi optique assistée par radar est disponible. La poursuite de l'objet cible est effectuée sur la base des plots radar.

Plus précisément, à l'étape 430, le moyen d'estimation 74 est exécuté pour estimer la position d'un plot estimé, dans l'image vidéo courante, en utilisant les informations des plots possibles associés à l'objet cible dans les images vidéo précédentes. L'algorithme d'estimation mis en oeuvre est par exemple du type filtre de Kalman, connu de l'homme du métier.

Puis, à l'étape 440, le moyen d'association 72 est exécuté pour déterminer s'il existe, dans l'image vidéo enrichie courante, un plot possible à associer au plot estimé.

Si un tel plot possible existe, il est enregistré en tant que détection radar de l'objet cible dans l'image vidéo courante.

Si un tel plot possible n'existe pas, le plot estimé est enregistré en tant que détection radar de l'objet cible dans l'image vidéo courante.

A l'étape 450, à chaque nouvelle détection radar de l'objet cible, la position du plot qui lui est associé est transmise au moyen d'asservissement 76 de manière à générer une commande adaptée à destination du module de pointage 38 de la caméra électro-optique 30, de manière à ce qu'elle continue à poursuivre l'objet cible, bien que celui-ci ne puisse pas être observé optiquement par la caméra électro-optique 30. Sur l'image vidéo enrichie, la cible réelle correspondant à l'objet cible reste au centre de l'écran de l'opérateur sur lequel le flux vidéo enrichi est affiché.

Ainsi, dans cas où la caméra électro-optique n'est plus capable de détecter et/ou de suivre un objet cible, les informations de la position de l'objet cible acquises avec le capteur radar permettent de continuer à suivre l'objet cible, en envoyant ces informations de position sous forme de commande vers la caméra électro-optique. L'assistance au suivi d'objet permet d'améliorer les performances du suivi optique d'un objet cible par un capteur optronique, lorsque la visibilité de l'objet cible est médiocre, en utilisant les informations provenant du capteur radar.

Le système de mission proposé permet donc d'utiliser au mieux et de combiner les informations provenant d'une caméra et d'un radar, pour localiser, identifier et suivre un objet cible d'intérêt, et ceci dès que possible.

En phase d'acquisition, la caméra électro-optique est avantageuse par rapport au radar seul et en phase de suivi, le radar est plus performant que la caméra électro-optique seule (en cas d'obstruction du champ d'observation). D'où l'intérêt du système de présenter ensemble les informations provenant de ces deux capteurs.

Il est à souligner qu'auparavant, l'identification d'un objet mobile détecté par le capteur radar nécessitait la création préalable d'une piste par le capteur radar afin de distinguer les objets d'intérêt dans le flux, potentiellement important, de plots radar. L'élaboration de telles pistes peut prendre du temps. De plus seules un petit nombre de pistes sont pertinentes et correspondent à un objet recherché.

## Revendications

1. Procédé de suivi optique assisté par radar, mis en oeuvre dans un système de mission comportant une caméra électro-optique générant des images vidéo, détectant des objets mobiles, et pistant un objet cible et un capteur radar générant des signaux et détectant des plots, **caractérisé en ce qu'**il comporte les étapes consistant à :
- Acquérir (110) une image vidéo délivrée par la caméra électro-optique et des plots délivrés par le capteur radar à l'instant de la génération de l'image vidéo acquise,
- Convertir (120) la position géographique de chaque plot acquis, exprimée dans un premier repère associé au capteur radar, en une position géographique exprimée dans un second repère associé à une direction de pointage de la caméra électro-optique à l'instant de la génération de l'image vidéo,
- Corriger (130) la position géographique de chaque plot dans le second repère, en fonction des caractéristiques de la caméra, de manière à obtenir une position du plot dans l'image vidéo.

2. Procédé selon la revendication 1, comportant en outre les étapes consistant à :
- Ajouter (140) à l'image vidéo un symbole graphique pour chaque plot, le symbole graphique étant placé dans l'image de manière à correspondre à la position dans l'image du plot associé, et
- Afficher (150) une image enrichie obtenue à partir de l'image vidéo et de symboles graphiques ajoutés.

3. Procédé selon la revendication 1 ou la revendication 2, comportant une étape (210) consistant à associer à chaque objet mobile détecté par la caméra électro-optique un plot possible, le plot possible à associer à un objet mobile étant le plot qui est le plus proche dudit objet mobile dans l'image vidéo, augmenté des informations de l'objet mobile correspondant.

4. Procédé selon la revendication 3, comportant une étape (430) consistant à estimer, dans l'image vidéo courante, la position d'un plot estimé, en utilisant les informations des plots possibles associés à un objet cible dans une ou plusieurs images vidéo précédentes.

5. Procédé selon la revendication 4, comportant une étape (440) consistant à associer à chaque plot estimé un plot possible, le plot possible à associer à un plot estimé étant le plot qui est le plus proche dudit plot estimé dans l'image vidéo.

6. Procédé selon la revendication 4 ou la revendication 5, comportant une étape (450) consistant à asservir la caméra électro-optique au moyen des informations relatives au plot estimé ou au plot possible associé au plot estimé correspondant à un objet cible.

7. Système de mission (10) comportant un capteur radar (20) et un caméra électro-optique (30), **caractérisé en ce qu'**il comporte un dispositif (50) propre à acquérir une image vidéo délivrée par la caméra électro-optique et des plots délivrés par le capteur radar à l'instant de la génération de l'image vidéo acquise, et comportant :
- Un moyen de transformation (62) d'une position géographique de chaque plot acquis, exprimée dans un premier repère associé au capteur radar, en une position géographique exprimée dans un second repère associé à une direction de pointage de la caméra (31) de la caméra électro-optique à l'instant de la génération de l'image vidéo,
- Un moyen de correction (64) de la position géographique de chaque plot dans le second repère en sortie du moyen de transformation, en fonction de caractéristiques de la caméra, de manière à obtenir une position du plot dans l'image vidéo.

8. Système selon la revendication 7, comportant en outre un moyen de superposition (66) propre à ajouter à l'image vidéo, un symbole graphique pour chaque plot, le symbole graphique étant placé dans l'image de manière à correspondre à la position dans l'image du plot associé, délivrée en sortie du moyen de correction (64), et une interface homme / machine d'affichage d'une image enrichie obtenue à partir de l'image vidéo et de symboles graphiques ajoutés.

9. Système selon la revendication 7 ou la revendication 8, comportant un moyen d'association (72) consistant à associer à chaque objet mobile détecté par la caméra électro-optique (30) un plot possible, le plot possible à associer à un objet mobile étant le plot qui est le plus proche dudit objet mobile dans l'image vidéo courante, augmenté des informations de l'objet mobile correspondant.

10. Système selon la revendication 9, comportant un moyen d'estimation (74) propre à estimer, dans l'image vidéo courante, la position d'un plot estimé, en utilisant les informations des plots possibles associés à un objet cible dans une ou plusieurs images vidéo précédentes.

11. Système selon la revendication 10, dans lequel le moyen d'association (72) est propre à associer à chaque plot estimé un plot possible, le plot possible à associer à un plot estimé étant le plot qui est le plus proche dudit plot estimé dans l'image vidéo courante.

12. Système selon la revendication 10 ou la revendication 11, comportant un moyen d'asservissement complémentaire (76) propre à commander un module de pointage (38) de la caméra électro-optique (30) au moyen des informations relatives au plot estimé ou au plot possible associé au plot estimé correspondant à un objet cible.

## Patentansprüche

1. Radargestütztes Verfahren zur optischen Verfolgung, welches in einem Missionssystem realisiert wird, welches aufweist eine elektrooptische Kamera, die Video-Bilder erzeugt, die mobile Objekte detektiert und die ein Ziel-Objekt verfolgt, und einen Radar-Sensor, der Signale erzeugt und Plots detektiert, **dadurch gekennzeichnet, dass** es die Schritte aufweist, die bestehen aus:
- Erlangen (110) eines Video-Bildes, welches mittels der elektrooptischen Kamera geliefert wird, und von Plots, die mittels des Radar-Sensors zu dem Zeitpunkt der Erzeugung des erlangten Video-Bildes geliefert werden,
- Umwandeln (120) der geographischen Position von jedem erlangten Plot, die in einem ersten Koordinatensystem ausgedrückt ist, das mit dem Radar-Sensor assoziiert ist, in eine geographische Position, die in einem zweiten Koordinatensystem ausgedrückt ist, das mit einer Zeige-Richtung der elektrooptischen Kamera zu dem Zeitpunkt der Erzeugung des Video-Bildes assoziiert ist,
- Korrigieren (130) der geographischen Position von jedem Plot in dem zweiten Koordinatensystem abhängig von Charakteristiken der Kamera, um eine Position des Plots in dem Video-Bild zu erlangen.

2. Verfahren gemäß Anspruch 1, welches ferner die Schritte aufweist, die bestehen aus:
- Hinzufügen (140) zu dem Video-Bild eines graphischen Symbols für jeden Plot, wobei das graphische Symbol in dem Bild angeordnet ist, um zu der Position in dem Bild des assoziierten Plots zu korrespondieren, und
- Darstellen (150) eines erweiterten Bildes, welches erlangt wird ausgehend von dem Video-Bild und den hinzugefügten graphischen Symbolen.

3. Verfahren gemäß Anspruch 1 oder Anspruch 2, welches einen Schritt (210) aufweist, der besteht aus Assoziieren von einem möglichen Plot mit jedem mobilen Objekt, welches mittels der elektrooptischen Kamera detektiert wird, wobei der mögliche Plot, welcher mit einem mobilen Objekt zu assoziieren ist, der Plot ist, welcher am nahesten zu dem besagten mobilen Objekt in dem Video-Bild ist, ergänzt mit Informationen des korrespondierenden mobilen Objekts.

4. Verfahren gemäß Anspruch 3, welches einen Schritt (430) aufweist, der besteht aus Abschätzen, in dem gegenwärtigen Video-Bild, der Position eines abgeschätzten Plots unter Verwendung der Informationen der möglichen Plots, die mit einem Ziel-Objekt in einem oder mehreren vorherigen Video-Bildern assoziiert sind.

5. Verfahren gemäß Anspruch 4, welches einen Schritt (440) aufweist, der besteht aus Assoziieren von einem möglichen Plot mit jedem abgeschätzten Plot, wobei der mögliche Plot, welcher mit einem abgeschätzten Plot zu assoziieren ist, der Plot ist, welcher am nahesten zu dem besagten abgeschätzten Plot in dem Video-Bild ist.

6. Verfahren gemäß Anspruch 4 oder Anspruch 5, welches einen Schritt (450) aufweist, der besteht aus Steuern der elektrooptischen Kamera mit Hilfe von Informationen betreffend den abgeschätzten Plot oder den möglichen Plot, welcher mit dem abgeschätzten Plot assoziiert ist, korrespondierend zu einem Ziel-Objekt.

7. Missionssystem (10), welches einen Radar-Sensor (20) und eine elektrooptische Kamera (30) aufweist, **dadurch gekennzeichnet, dass** es eine Vorrichtung (50) aufweist, die geeignet ist, um ein Video-Bild, welches mittels der elektrooptischen Kamera geliefert wird, und Plots, welche mittels des Radar-Sensors zu dem Zeitpunkt der Erzeugung des erlangten Video-Bildes geliefert werden, zu erlangen, und welches aufweist:
- ein Mittel zum Umwandeln (62) einer geographischen Position von jedem erlangten Plot, die in einem ersten Koordinatensystem ausgedrückt ist, das mit dem Radar-Sensor assoziiert ist, in eine geographische Position, die in einem zweiten Koordinatensystem ausgedrückt ist, das mit einer Zeige-Richtung der Kamera (31) der elektrooptischen Kamera zu dem Zeitpunkt der Erzeugung des Video-Bildes assoziiert ist,
- ein Mittel zum Korrigieren (64) der geographischen Position von jedem Plot in dem zweiten Koordinatensystem, ausgegeben von dem Mittel zum Umwandeln, abhängig von Charakteristiken der Kamera, um eine Position des Plots in dem Video-Bild zu erlangen.

8. System gemäß Anspruch 7, welches ferner aufweist ein Mittel zum Überlagern (66), welches geeignet ist, um zu dem Video-Bild ein graphisches Symbol für jeden Plot hinzuzufügen, wobei das graphische Symbol in dem Bild angeordnet ist, um zu der Position in dem Bild des assoziierten Plots zu korrespondieren, geliefert am Ausgang des Mittels zum Korrigieren (64), und eine Mensch/Maschine-Schnittstelle zum Darstellen eines erweiterten Bildes, welches ausgehend von dem Video-Bild und den hinzugefügten graphischen Symbolen erlangt wird.

9. System gemäß Anspruch 7 oder Anspruch 8, welches ein Mittel zum Assoziieren (72) aufweist, um mit jedem mittels der elektrooptischen Kamera (30) detektierten mobilen Objekt einen möglichen Plot zu assoziieren, wobei der mögliche Plot, welcher mit einem mobilen Objekt zu assoziieren ist, der Plot ist, welcher am nahesten zu dem besagten mobilen Objekt in dem gegenwärtigen Video-Bild ist, ergänzt mit Informationen des korrespondierenden mobilen Objekts.

10. System gemäß Anspruch 9, welches ein Mittel zum Abschätzen (74) aufweist, welches imstande ist, um in dem gegenwärtigen Video-Bild die Position eines abgeschätzten Plots abzuschätzen, unter Verwendung der Informationen von möglichen Plots, die mit einem Ziel-Objekt in einem oder mehreren vorherigen Video-Bildern assoziiert sind.

11. System gemäß Anspruch 10, wobei das Mittel zum Assoziieren (72) imstande ist, um mit jedem abgeschätzten Plot einen möglichen Plot zu assoziieren, wobei der mögliche Plot, der mit einem abgeschätzten Plot zu assoziieren ist, der Plot ist, der am nahesten zu dem besagten abgeschätzten Plot in dem gegenwärtigen Video-Bild ist.

12. System gemäß Anspruch 10 oder Anspruch 11, welches ein ergänzendes Mittel zum Steuern (76) aufweist, welches imstande ist, um ein Zeigen-Modul (38) der elektrooptischen Kamera (30) zu steuern, mit Hilfe von Informationen betreffend den abgeschätzten Plot oder den möglichen Plot, welcher mit dem abgeschätzten Plot assoziiert ist, korrespondierend zu einem Ziel-Objekt.

## Claims

1. A radar-assisted optical tracking method, implemented within a mission system comprising an electro-optical camera which generates video images, detects movable objects, and tracks a target object, and a radar sensor which generates signals and detects blip, **characterised in that** it includes the following steps of:
- Acquiring (110) a video image provided by the electro-optical camera and blips provided by the radar sensor at the time instant of generation of the acquired video image;
- Converting (120) the geographic position of each acquired blip, expressed in a first reference frame associated with the radar sensor, into a geographic position expressed in a second reference frame associated with a pointing direction of the electro-optical camera at the time instant of generation of the video image;
- Correcting (130) the geographic position of each blip in the second reference frame, according to the characteristic features of the camera, in a manner such as to obtain a position of the blip in the video image.

2. A method according to claim 1, further including the following steps of:
- Adding (140) a graphic symbol to the video image for each blip, the graphic symbol being placed in the image in a manner so as to correspond to the position in the image of the associated blip; and
- Displaying (150) an enhanced image obtained based on the video image and the graphics symbol added.

3. A method according to claim 1 or claim 2, including a step (210) that consists of associating with each moving object detected by the electro-optical camera a possible blip, the possible blip to be associated with a moving object being the blip which is the nearest to the said moving object in the video image, augmented with pieces of information related to the corresponding moving object.

4. A method according to claim 3, including a step (430) that consists of estimating, in the current video image, the position of an estimated blip , using the information of the possible blips associated with a target object in one or more preceding video images.

5. A method according to claim 4, including a step (440) that consists of associating with each estimated blip a possible blip, the possible blip to be associated with an estimated blip being the blip which is the nearest to said estimated blip in the video image.

6. A method according to claim 4 or claim 5, including a step (450) that consists of servo-controlling the electro-optical camera by making use of the information related to the estimated blip or to the possible blip associated with the estimated blip corresponding to a target object.

7. A mission system (10) that comprises a radar sensor (20) and an electro-optical camera, **characterised in that** it includes a device (50) that is capable of acquiring a video image provided by the electro-optical camera and blips provided by the radar sensor at the time instant of generation of the acquired video image, and comprising:
- A transformation means for transforming a geographic position of each acquired blip (62), expressed in a first reference frame associated with the radar sensor, into a geographic position expressed in a second reference frame associated with a pointing direction of the electro-optical camera (31) at the time instant of generation of the video image;
- A position correction means (64) for correcting the geographic position of each blip in the second reference frame output from the transformation means, based on characteristic features of the camera, in a manner such as to obtain a position in the image.

8. A system according to claim 7, further comprising a superposition means (66) that is capable of adding to the video image, a graphic symbol for each blip , the graphic symbol being placed into the image in a manner so as to correspond to the position in the image of the associated blip that is provided as output from the correction means (64), and a human / machine display interface for displaying an enhanced image obtained based on the video image and the graphic symbol added.

9. A system according to claim 7 or claim 8, including a means of association (72) that consists of associating with each moving object detected by the electro-optical camera (30) a possible blip , the possible blip to be associated with a moving object being the blip which is the nearest to said moving object in the current video image augmented with added information related to the corresponding moving object.

10. A system according to claim 9, including an estimation means (74) that is capable of estimating, in the current video image, the position of an estimated blip, using the piece of information related to the possible blips associated with a target object in one or more preceding video images.

11. A system according to claim 10, in which the means of association (72) is capable of associating with each estimated blip a possible blip, the possible blip to be associated with an estimated blip being the blip which is the nearest to the said estimated blip in the current video image.

12. A system according to claim 10 or claim 11, including an additional servo-control means (76) that is capable of command-controlling a pointing module (38) of the electro-optical camera (30) by making use of the piece of information related to the estimated blip or to the possible blip associated with the estimated blip corresponding to a target object.
